# EUROPEAN PATENT SPECIFICATION

(11) **EP 4 253 964 B1**
(45) Date of publication and mention of the grant of the patent: **18.11.2026**
(21) Application number: 21897429.3
(22) Date of filing: 27.08.2021
(51) Int. Cl.: G01N 35/00

(54) **AUTOMATED ANALYZER**
AUTOMATISCHER ANALYSATOR
ANALYSEUR AUTOMATISÉ

(30) Priority: 30.11.2020 JP 2020198163
(43) Date of publication of application: 04.10.2023
(73) Proprietor: HITACHI HIGH-TECH CORPORATION, Tokyo 105-6409 (JP)
(72) Inventor: NAKAI Marina, Tokyo 105-6409 (JP); SASAKI Shunsuke, Tokyo 105-6409 (JP); OKUSA Takenori, Tokyo 105-6409 (JP); FUJITA Hiroki, Tokyo 105-6409 (JP); MISHIMA Hiroyuki, Tokyo 105-6409 (JP)
(74) Representative: Strehl & Partner mbB
(86) International application number: PCT/JP2021/031524
(87) International publication number: WO 2022/113451

(56) References cited:
- WO-A1-2014/119399
- WO-A1-2021/038918
- CA-A1- 3 138 508
- CN-U- 204 938 999
- JP-A- 2001 083 676
- JP-A- 2001 083 676
- JP-A- 2003 083 989
- JP-A- 2003 294 763
- JP-A- 2010 151 672
- JP-A- 2011 117 815
- JP-A- 2015 129 676
- JP-A- 2016 095 133
- JP-A- 2016 186 465
- JP-A- H05 264 555
- JP-A- H05 293 448
- JP-A- H05 293 448
- JP-A- S5 899 759
- JP-B2- 3 261 020
- US-A1- 2008 154 543

## Description

### Technical Field

The present invention relates to an automatic analyzer.

### Background Art

An automatic analyzer is a device that performs qualitative analysis or quantitative analysis of a specific component contained in a biological specimen such as blood, urine, or spinal fluid, and is an essential device in a facility in which many patient samples need to be processed in a short time, such as a hospital or medical examination facility.

Such an automatic analyzer is connected with a waste fluid processing facility of the installation destination, a waste fluid tank attached to the automatic analyzer, or the like in order to discharge waste fluid produced by an analysis process or the like. Since the waste fluid discharged from the automatic analyzer contains components derived from a living body, it is necessary to strictly manage the waste fluid as a biohazard substance.

For example, in a case of a configuration of storing the waste fluid discharged from the automatic analyzer in the tank, it is necessary to securely prevent leakage of the waste fluid from the tank. Therefore, there has been an automatic analyzer including a liquid level detection sensor provided in the waste fluid tank and has a function of promptly stopping the discharge of the waste fluid from the automatic analyzer when a water level reaches a dangerous water level. However, in a configuration using only the sensor, it is difficult for a customer to expect a timing of measurement stop based on the tank water level, which causes a loss of a sample due to unexpected measurement stops, a report delay of a measurement result, and the like.

As a technique in the related art corresponding to such a problem, for example, PTL 1 discloses an automatic analyzer that determines an excess or deficiency of remaining amounts of a reagent, a detergent, and pure water and an excess or deficiency of a free space of a waste fluid tank before starting analyzing a sample, and starts analyzing the sample only when the deficiency of the amounts of the reagent, the detergent, and the pure water and the free space of the waste fluid tank is not detected.

### Citation List

### Patent Literature

PTL 1: JP2015-129676A

US 2008/154543 A1 discloses an automatic analyzer with the features in the preamble of present claim 1.

### Summary of Invention

### Technical Problem

However, although an unexpected measurement stop can be avoided in the related art described above, it is difficult to construct a workflow for a customer since it is difficult to know the time until the measurement stops.

The invention has been made in view of the above, and an object of the invention is to provide an automatic analyzer that can be operated while workflows are easily considered and unexpected measurement stops are avoided.

### Solution to Problem

The present application solves the above problem by the automatic analyzer defined in appended claim 1.

### Advantageous Effects of Invention

According to the invention, it is possible to operate the analyzer while workflows are easily considered and unexpected measurement stops are avoided.

### Brief Description of Drawings

[Fig. 1] Fig. 1 is a plan view schematically showing the overall structure of an automatic analyzer.
[Fig. 2] Fig. 2 is a flowchart showing the state transition of the automatic analyzer.
[Fig. 3] Fig. 3 is a view schematically showing the configuration of a thin waste fluid tank.
[Fig. 4] Fig. 4 is a diagram showing a setting screen 204 that sets a waste fluid tank connection method and a timer.
[Fig. 5] Fig. 5 is a flowchart showing process contents in the operation of the thin waste fluid tank at the time of normal operation.
[Fig. 6] Fig. 6 is a diagram showing a thin waste fluid tank timer activation alarm screen.
[Fig. 7] Fig. 7 is a diagram showing a thin waste fluid tank time-out alarm screen.
[Fig. 8] Fig. 8 is a diagram showing a thin waste fluid tank liquid level emergency stop level alarm screen.
[Fig. 9] Fig. 9 is a diagram showing a thin waste fluid tank failure alarm screen.
[Fig. 10] Fig. 10 is a view schematically showing the configuration of a thick waste fluid tank.
[Fig. 11] Fig. 11 is a flowchart showing process contents in the operation of the thick waste fluid tank at the time of normal operation.
[Fig. 12] Fig. 12 is a diagram showing a thick waste fluid tank liquid level stop alarm screen.
[Fig. 13] Fig. 13 is a diagram showing a thick waste fluid tank liquid level emergency stop level alarm screen.
[Fig. 14] Fig. 14 is a diagram showing a thick waste fluid tank failure alarm screen.
[Fig. 15] Fig. 15 is a flowchart showing process contents in the operation of the thin waste fluid tank at the time of starting the analyzer.
[Fig. 16] Fig. 16 is a diagram showing a thin waste fluid tank replacement alarm at the time of starting the analyzer.
[Fig. 17] Fig. 17 is a flowchart showing process contents in the operation of the thick waste fluid tank at the time of starting the analyzer.
[Fig. 18] Fig. 18 is a diagram showing a thick waste fluid tank replacement alarm at the time of starting the analyzer.
[Fig. 19] Fig. 19 is a flowchart showing process contents in the operation of the thin waste fluid tank in a state other than a normal state in which the acceptation of a new sample is permitted all the time.
[Fig. 20] Fig. 20 is a flowchart showing process contents in the operation of the thick waste fluid tank in a state other than a normal state in which the acceptation of a new sample is permitted all the time.

### Description of Embodiments

Hereinafter, embodiments of the invention will be described with reference to the drawings. In the present embodiment, an automatic analyzer represented by a biochemical automatic analyzer or an immune automatic analyzer, or the like will be described as an example, the invention is not limited thereto, and the invention can also be applied to other devices that react a sample with a reagent and analyze the sample based on the reaction result, such as a mass spectrometer used for a clinical examination and a coagulation analyzer for measuring coagulation time of blood. In addition, the invention can also be applied to a complex system of the analyzers and the biochemical automatic analyzer or the immune automatic analyzer, or an automatic analysis system to which the analyzers are applied.

### <First Embodiment>

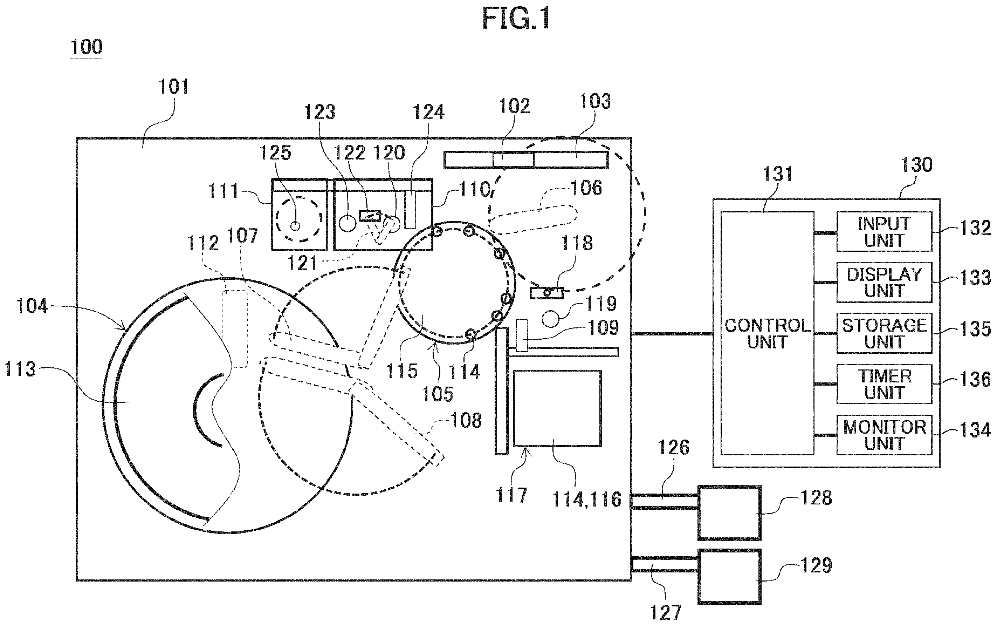

The first embodiment according to the invention will be described in detail with reference to Figs. 1 to 14.

Fig. 1 is a plan view schematically showing an overall structure of an automatic analyzer.

In Fig. 1, an automatic analyzer 100 includes an analysis unit 101 and a controller 130. The analysis unit 101 includes a rack transport line 103 that transports a rack 102, a reagent low temperature insulation unit 104, an incubator (reaction disk) 105, a sample dispensing mechanism (specimen dispensing mechanism) 106, a reagent dispensing mechanism 107, a reagent stirring mechanism 108, a consumable item transport mechanism 109, a B/F separation unit 110, and a detecting unit 111.

The rack 102 houses a plurality of sample containers (specimen containers) that house biological samples (samples) such as blood and urine, and is transported on a rack 102 transport line in a state in which the sample containers are housed.

The reagent low temperature insulation unit 104 is a reagent container storage part and houses and low-temperature-insulates a plurality of reagent containers 112 housing various reagents used for sample analysis. At least a part of an upper surface of the reagent low temperature insulation unit 104 is covered with a reagent disk cover 113. A part of the reagent disk cover 113 can be opened and closed, and the reagent containers 112 can be taken in and out.

The incubator 105 includes a reaction container placement part 115 in which a plurality of reaction containers 114 for reacting the samples and the reagents are placed, and a temperature adjustment mechanism that adjusts temperatures of the reaction containers 114 to a desired temperature.

The sample dispensing mechanism 106 includes a rotation driving mechanism and a vertical driving mechanism, and can dispense, by the driving mechanisms, a sample from a sample container into the reaction containers 114 housed in the incubator 105.

The reagent dispensing mechanism 107 has the same configuration as that of the sample dispensing mechanism 106. That is, the reagent dispensing mechanism 107 includes a rotation driving mechanism and a vertical driving mechanism, and dispenses, by the driving mechanisms, a reagent from the reagent container 112 into the reaction containers 114 housed in the incubator 105.

The reagent stirring mechanism 108 includes a rotation driving mechanism and a vertical driving mechanism, and stirs the reagent in the reagent container 112 by rotating a stirring paddle.

The consumable item transport mechanism 109 transports a plurality of unused reaction containers 114 and unused dispensing tips 116 from a reaction container dispensing tip housing container 117 to a dispensing tip installation position 118 accessed by the incubator 105 or the sample dispensing mechanism 106, or transports the reaction container 114 containing reaction solution from the incubator 105 to a stirring mechanism 119.

The B/F separation unit 110 includes a separation part 120 that collects magnetic particles, a B/F separation probe 121 that aspirates the reaction solution and discharges a buffer solution, a B/F separation probe cleaning unit 122 that cleans the B/F separation probe 121, a B/F separating stirring unit 123 that redistributes the magnetic particles once collected, a transport unit 124 that transports the reaction containers 114 provided in the incubator 105 to the B/F separation unit 110 or the detecting unit 111.

The detecting unit 111 includes a reaction solution aspiration nozzle 125 that aspirates reaction solution in the reaction container 114, a photomultiplier tube, a light source lamp, a spectroscope, and a photodiode, has a function of adjusting their temperatures, and analyzes the reaction solution.

Driving performed by a driving unit of the analysis unit 101 is controlled by the controller 130. In addition, in the analysis unit 101, a fluid is discharged for driving or cleaning. The analysis unit 101 includes a thin waste fluid flow path and a thick waste fluid flow path according to a type of the fluid to be discharged. With respect to the type of the fluid to be discharged, the fluid to be discharged having a high possibility of containing an infectious substance is classified as a thick waste fluid, and the fluid to be discharged having a low possibility of containing an infectious substance is classified as a thin waste fluid. In addition, a waste fluid to be discharged may be discharged by mixing the thick waste fluid and the thin waste fluid.

In a case where the waste fluid is thin waste fluid, the waste fluid is discharged from the thin waste fluid flow path to a thin waste fluid outlet port 126. In addition, in the case of thick waste fluid, the thick waste fluid is discharged from the thick waste fluid flow path to a thick waste fluid outlet port 127. The thin waste fluid outlet port 126 and the thick waste fluid outlet port 127 can be connected to a customer waste fluid facility or a thin waste fluid tank 128 and a thick waste fluid tank 129 attached to analysis unit 101. In the present embodiment, the attached thin waste fluid tank 128 and thick waste fluid tank 129 are connected to the thin waste fluid outlet port 126 and the thick waste fluid outlet port 127, respectively. It is also possible to connect both the thin waste fluid outlet port 126 and the thick waste fluid outlet port 127 to the customer waste fluid facility. In addition, it is also possible to connect one of the thin waste fluid outlet port 126 and the thick waste fluid outlet port 127 to the customer waste fluid facility, and connect the other one to a corresponding tank.

The controller 130 includes a control unit 131 that controls processing and operation of each component of the automatic analyzer 100 including the controller 130 and the analysis unit 101, an input unit 132 that receives a user's work request, a display unit 133 that outputs an operation instruction to the user, a monitor unit 134 that monitors a state of the analysis unit 101, a storage unit 135 that stores the processing performed by the control unit 131, and a timer unit 136 that can be activated by the control unit 131.

The monitor unit 134 monitors the state of the analysis unit 101 using position sensor information or the like, and monitors whether the analysis unit 101 is measuring a sample.

The control unit 131 of the controller 130 can include a central processing unit (CPU). The entire controller 130 can be implemented using a personal computer (PC) including the control unit 131 including the CPU, the input unit 132 such as a keyboard and a mouse, the display unit 133 such as a liquid crystal display, and the storage unit 135 such as a semiconductor memory. In this case, the monitor unit 134 which monitors the position sensor information and the like may be implemented by executing a program of the CPU that is the control unit 131.

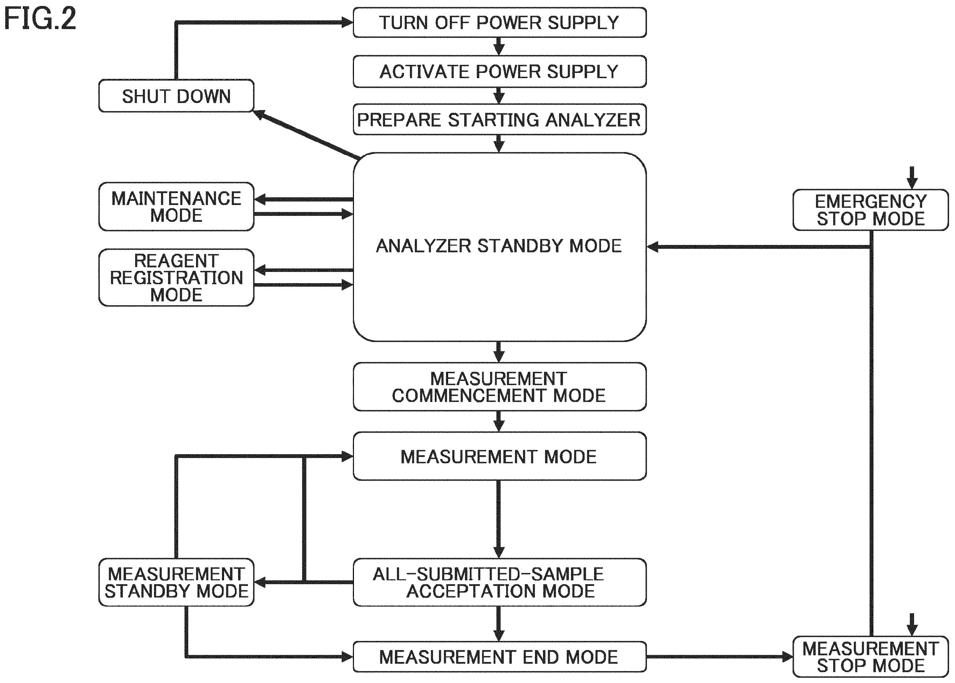

Fig. 2 is a flowchart showing state transition of the automatic analyzer.

In Fig. 2, the automatic analyzer 100 activates a power supply by turning on the power supply from a power off state, prepares starting of the analyzer, and then transitions to an analyzer standby mode for waiting for measurement commencement. Normally, the analyzer standby mode can transition to a maintenance mode and a reagent registration mode all the time. When there is a measurement start request, the automatic analyzer 100 transitions from the analyzer standby mode to a measurement commencement mode, and transitions to a measurement mode for performing sample measurement. When there is no sample whose measurement is not accepted, the mode transitions to an all-submitted-sample acceptation mode. When set to transition to a measurement standby mode after the measurement on all submitted samples is ended, the automatic analyzer 100 transitions to the measurement standby mode and is in a state in which new measurement can be accepted at any time. In addition, when not set to transition to the measurement standby mode, the automatic analyzer transitions to a measurement end mode when the measurement on all the submitted samples is ended. When measurement end operation performed by the measurement end mode is ended, the automatic analyzer 100 shifts to a measurement stop mode, and the state transitions to the analyzer standby mode. It is possible to shift from all states except for power off to an emergency stop mode. When a fault to stop operation in an emergency is detected in the automatic analyzer 100, it is possible to shift to the emergency stop mode, stop all operation, and forcibly transition to the analyzer standby mode. In addition, the automatic analyzer 100 transitions from the analyzer standby mode to the power off state by being shut down.

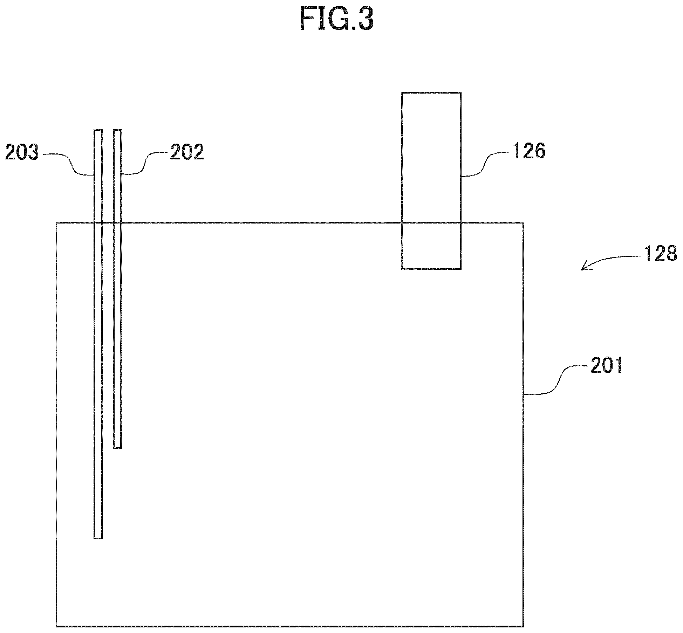

Fig. 3 is a view schematically showing a configuration of a thin waste fluid tank.

In Fig. 3, the thin waste fluid tank 128 includes a thin waste fluid housing unit 201 that houses a waste fluid discharged from the thin waste fluid outlet port 126 of the automatic analyzer 100, an emergency stop thin waste fluid height sensor 202 that detects a height of the waste fluid housed in the thin waste fluid housing unit 201, and an attention attraction thin waste fluid height sensor 203.

The emergency stop thin waste fluid height sensor 202 is capable of detecting a liquid level of height serving as a full water position of the thin waste fluid tank 128. It can be seen that the thin waste fluid tank 128 is full when the sensor detects the liquid level. In this case, it is expected that the waste fluid overflows and leaks when the waste fluid is additionally supplied to the thin waste fluid tank 128, and thus the automatic analyzer 100 stops the discharge of the waste fluid. On the other hand, when the emergency stop thin waste fluid height sensor 202 detects the liquid level, an event is assumed in which a patient sample under measurement cannot be measured completely since the automatic analyzer 100 is emergency stopped, which is basically to be avoided. Therefore, the automatic analyzer 100 includes, in addition to the emergency stop thin waste fluid height sensor 202, the attention attraction thin waste fluid height sensor 203 that detects waste fluid height at a position lower than that of the emergency stop thin waste fluid height sensor 202.

The attention attraction thin waste fluid height sensor 203 is provided for a purpose of attracting attention of an operator and preventing emergency stopping the analyzer. The emergency stop thin waste fluid height sensor 202 and the attention attraction thin waste fluid height sensor 203 are connected to the automatic analyzer 100, and states thereof can be monitored by the monitor unit 134 all the time. Since a discharge amount of the thin waste fluid is larger than that of the thick waste fluid and quickly reaches the full water during continuous operation, the attention attraction thin waste fluid height sensor 203 is capable of detecting a liquid level at a sufficiently low position. On the other hand, in a facility using a tank, an operation amount of the automatic analyzer 100 may be low and the thin waste fluid may be slowly discharged. In this case, the attention attraction thin waste fluid height sensor 203 at a too low position outputs the attention attraction too early, and the operator is required to discard the waste fluid in the tank even though the waste fluid can completely be continuously used.

Therefore, in the present embodiment, the thin waste fluid tank 128 and two monitoring sensors perform timer monitoring. The emergency stop thin waste fluid height sensor 202 and the attention attraction thin waste fluid height sensor 203 are monitored by the monitor unit 134 all the time. When the attention attraction thin waste fluid height sensor 203 detects the liquid level, the monitor unit 134 notifies the control unit 131 of the detection, and the control unit 131 activates the timer unit 136. Time of the timer unit 136 may be displayed on the display unit 133. The automatic analyzer 100 checks a behavior of the timer unit and states of the two sensors, and performs appropriate waste fluid management.

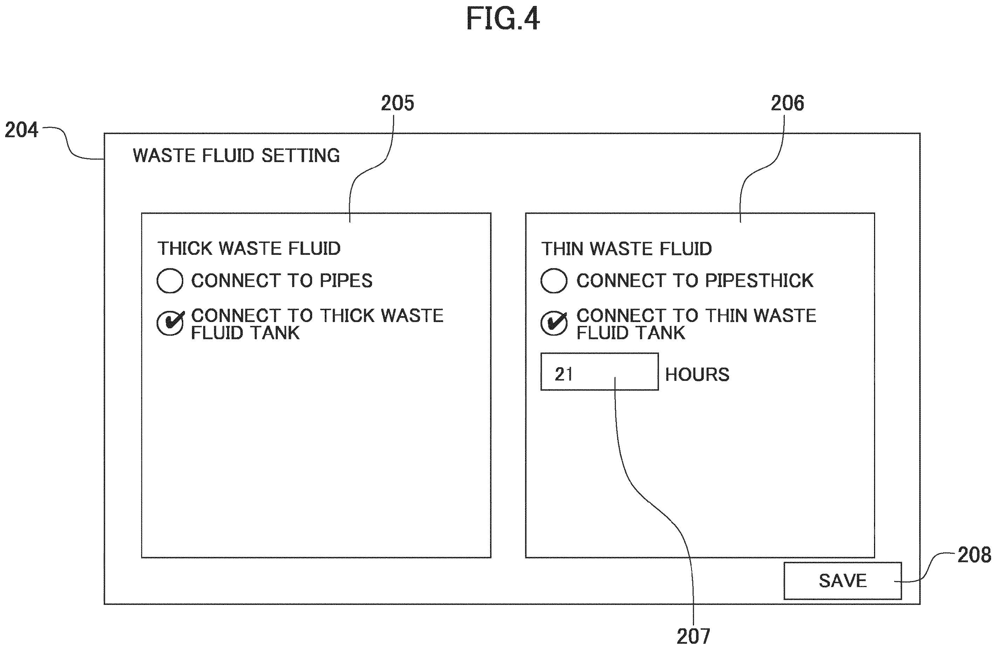

Fig. 4 is a diagram showing a setting screen 204 that sets a waste fluid tank connection method and a timer.

In Fig. 4, the setting screen 204 includes thick waste fluid setting 205 and thin waste fluid setting 206, and is displayed on the display unit 133.

In the thick waste fluid setting 205, pipe connection or tank connection can be selected by the input unit 132.

In the thin waste fluid setting 206, the pipe connection or the tank connection can be selected by the input unit 132. When the tank connection is selected in the thin waste fluid setting 206, timer time setting 207 is editable by the input unit 132.

Any number can be input into the timer time setting 207. After the thick waste fluid setting 205 and the thin waste fluid setting 206 are edited, contents edited in the thick waste fluid setting 205 and the thin waste fluid setting 206 are reflected by selecting the save button 208 by the input unit 132. Behaviors of the waste fluid tank described below are only a case where the tank connection is selected in the thick waste fluid setting 205, or only a case where the tank connection is selected in the thin waste fluid setting 206. When the waste fluid tank is connected to the customer waste fluid facility, a sensor for managing the waste fluid amount is not provided, and the waste fluid amount is not managed by an automatic analyzer 100 side.

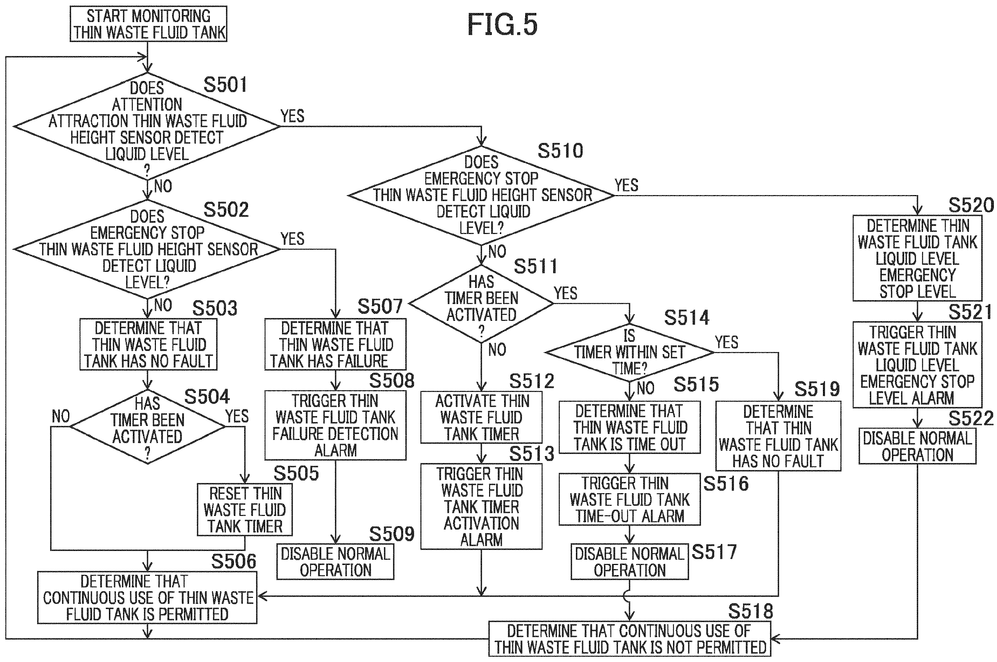

Fig. 5 is a flowchart showing processing content in thin waste fluid tank operation during normal operation.

Here, the normal operation means the measurement mode, the all-submitted-sample acceptation mode, and the measurement standby mode. During the normal operation, a flowchart shown in Fig. 5 is performed at regular intervals all the time.

In Fig. 5, first, it is determined whether the attention attraction thin waste fluid height sensor 203 detects the liquid level (S501), and in a case where the determination result is NO, it is determined whether the emergency stop thin waste fluid height sensor 202 detects the liquid level (S502). In a case where the determination result in step S502 is NO, it is determined that the thin waste fluid tank has no fault (step S503).

Subsequently, it is determined whether the timer unit is activated and starts counting (step S504), and in a case where the determination result is YES, counting related to the thin waste fluid tank is reset (step S505), it is determined that continuous use of the thin waste fluid tank is permitted (step S506), and the process returns to step S501. In addition, in a case where the determination result in step S504 is NO, the process proceeds to step S506, and then the process returns to step S501.

In addition, in a case where the determination result in step S502 is YES, it is determined that the thin waste fluid tank has a failure (step S507), a thin waste fluid tank failure detection alarm is triggered (step S508), and the normal operation is disabled (step S509).

In addition, in a case where the determination result in step S501 is YES, it is determined whether the emergency stop thin waste fluid height sensor 202 detects the liquid level (step S510). In a case where the determination result in step S510 is NO, it is determined whether the timer unit is activated and starts counting (step S511). In a case where the determination result in step S511 is NO, the timer unit 136 related to the thin waste fluid tank 128 starts counting (step S512), a thin waste fluid tank timer activation alarm is triggered (step S513), and the process proceeds to step S506.

In addition, in a case where the determination result in step S511 is YES, it is determined whether counting performed by the timer unit 136 is performed within predetermined set time (step S514). In a case where the determination result in step S514 is NO, it is determined that the thin waste fluid tank is time out (step S515), a thin waste fluid tank time-out alarm is triggered (step S516), the normal operation is disabled (step S617), it is determined that the continuous use of the thin waste fluid tank is not permitted (step S518), and the process returns to step S501. In addition, in a case where the determination result in step S514 is YES, it is determined that the thin waste fluid tank has no fault (step S519), and the process proceeds to step S506.

In addition, in a case where the determination result in step S510 is YES, a thin waste fluid tank liquid level emergency stop level is determined (step 520), a thin waste fluid tank emergency stop level alarm is triggered (step S521), the normal operation is disabled (step S522), and the process proceeds to step S518.

In general, in the thin waste fluid tank 128, the waste fluid in the tank is discarded by the operator before the automatic analyzer 100 is activated, and thus the emergency stop thin waste fluid height sensor 202 and the attention attraction thin waste fluid height sensor 203 do not detect the liquid level. Therefore, steps S501 to S506 are repeated continuously until a position of the attention attraction thin waste fluid height sensor 203 is reached during the normal operation. When the cycle is repeated, a waste fluid amount gradually increases with the operation of the automatic analyzer 100, and the liquid level reaches the position of the attention attraction thin waste fluid height sensor 203. In this case, the timer unit 136 is activated and starts counting. In order to attract attention of the operator when the timer unit 136 is activated, the control unit 131 triggers the thin waste fluid tank timer activation alarm.

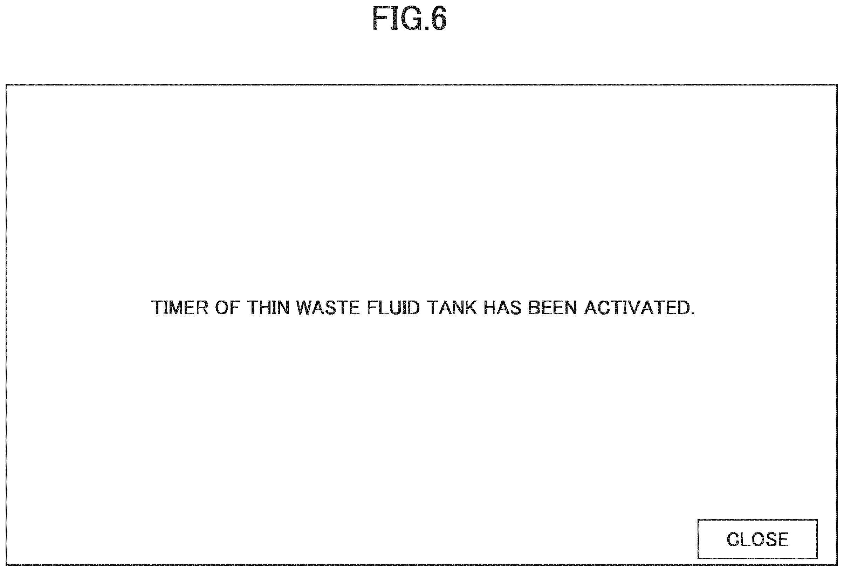

Fig. 6 is a diagram showing a thin waste fluid tank timer activation alarm screen.

When height of the waste fluid is at a level of the attention attraction thin waste fluid height sensor 203, the normal operation can be sufficiently and continually performed, and thus the automatic analyzer 100 is not stopped. In addition, since the thin waste fluid tank 128 does not discharge the waste fluid only in the power off state or in the analyzer standby mode, the waste fluid can be discarded by the operator. Therefore, in the case of the normal operation and the analyzer standby mode, the operator may check the thin waste fluid tank timer activation alarm to discard the waste fluid in the thin waste fluid tank 128, and the attention attraction thin waste fluid height sensor 203 stops detecting. In this case, since it is not necessary to continue to activate the timer unit 136, processing of resetting the timer unit 136 is performed in step S504. On the other hand, when the normal operation is continued without discarding the waste fluid in the thin waste fluid tank 128 even after the thin waste fluid tank timer activation alarm is confirmed, the timer unit 136 continues counting to proceed the timer. In step S514, the control unit 131 compares time of the timer unit 136 with time in the preset timer time setting 207, and can continue the normal operation if the time of the timer unit 136 is within the time in the timer time setting 207. However, when time in the timer time setting 207 is passed, the control unit 131 determines in step S515 that the thin waste fluid tank is time out, and the control unit 131 triggers the thin waste fluid tank time-out alarm in step S516.

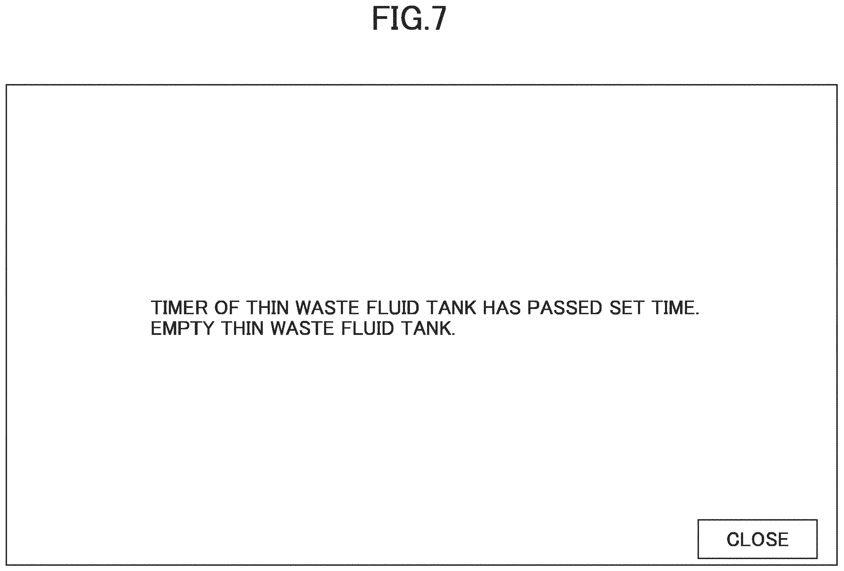

Fig. 7 is a diagram showing a thin waste fluid tank time-out alarm screen.

The control unit 131 causes the display unit 133 to display the screen shown in Fig. 7, and promotes a user to empty the tank. Thereafter, dispensing acceptation of a new sample is stopped in step S517. In this case, the measurement is continued for a test in which the sample is dispensed into, by the sample dispensing mechanism 106, the reaction containers 114 housed in the incubator 105. In step S518, the control unit 131 determines that the continuous use of the thin waste fluid tank is not permitted, and when the automatic analyzer 100 is in the analyzer standby mode, the transition to a mode other than shut down is disabled. When the automatic analyzer 100 is in the measurement mode, the all-submitted-sample acceptation mode, or the measurement standby mode, the automatic analyzer 100 transitions to the all-submitted-sample acceptation mode in which it is not possible to return to the previous state, causes the measurement to end, and shifts to the analyzer standby mode in which the transition to a mode other than shut down is disabled. In the analyzer standby mode, the sensor state is continuously monitored, and the analyzer standby mode, in which the transition to a mode other than shut down is disabled, is continued unless the time of the timer unit 136 is reset.

Even within the time in the timer time setting 207, when the emergency stop thin waste fluid height sensor 202 indicating that a discharge amount of the waste fluid is large and the tank is full detects the liquid level, the control unit 131 determines in step S520 that the liquid level of the thin waste fluid tank 128 is an emergency stop level, and the control unit 131 triggers the thin waste fluid tank liquid level emergency stop level alarm in step S521.

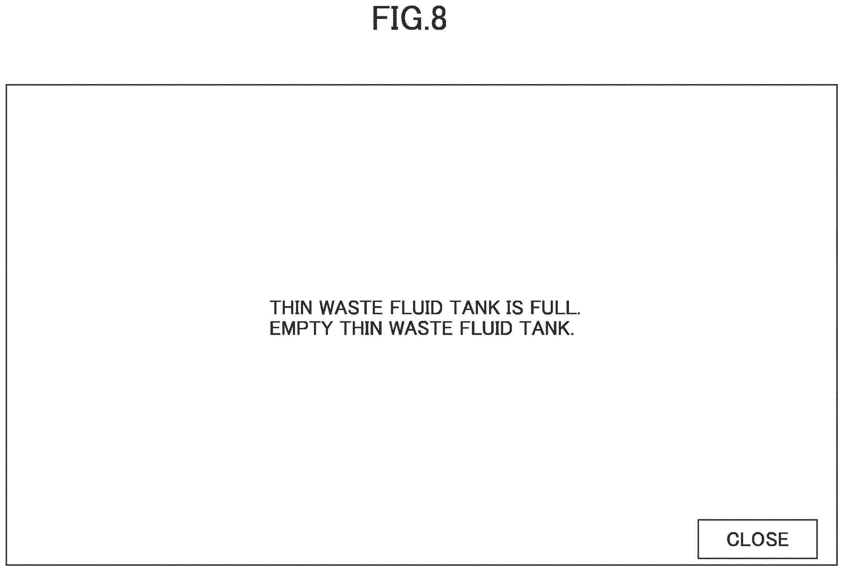

Fig. 8 is a diagram showing a thin waste fluid tank liquid level emergency stop level alarm screen.

The control unit 131 displays the screen shown in Fig. 8 on the display unit 133, and the automatic analyzer 100 is emergency stopped in step S522. In this case, the measurement is also stopped in the test in which the sample is already dispensed by the sample dispensing mechanism 106. In step S518, the control unit 131 determines that the continuous use of the thin waste fluid tank is not permitted, and when the automatic analyzer 100 is in the analyzer standby mode, the transition to a mode other than shut down is disabled. When the automatic analyzer 100 is in the measurement mode, the all-submitted-sample acceptation mode, or the measurement standby mode, the automatic analyzer 100 transitions to the emergency stop mode, forcibly causes the measurement to end, and shifts to the analyzer standby mode in which the transition to a mode other than shut down is disabled. Even in this state, the sensor state is continuously monitored until the two sensors stop detecting the liquid level.

A process when two sensors of the thin waste fluid tank 128 have a failure is as follows. That is, when the emergency stop thin waste fluid height sensor 202 detects the liquid level in step S502, the emergency stop thin waste fluid height sensor 202 at a position higher than that of the attention attraction thin waste fluid height sensor 203 detects the liquid level. In this case, in step S507, the control unit 131 determines that the sensors have a failure. In this case, in step S508, the control unit 131 triggers the thin waste fluid tank failure detection alarm, and displays the thin waste fluid tank failure detection alarm on the display unit 133.

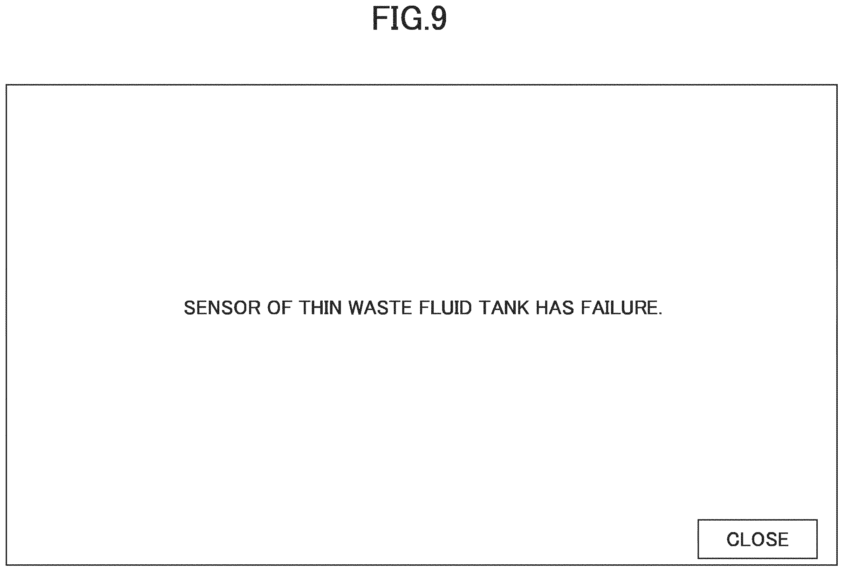

Fig. 9 is a diagram showing a thin waste fluid tank failure alarm screen.

After displaying the screen shown in Fig. 9, the control unit 131 emergency stops the automatic analyzer 100 in step S509. In this case, the measurement is also stopped in the test in which the sample is already dispensed by the sample dispensing mechanism 106. Until the emergency stop thin waste fluid height sensor 202 and the attention attraction thin waste fluid height sensor 203 stop detecting the waste fluid, the automatic analyzer 100 continues stopping the dispensing acceptation of the new sample.

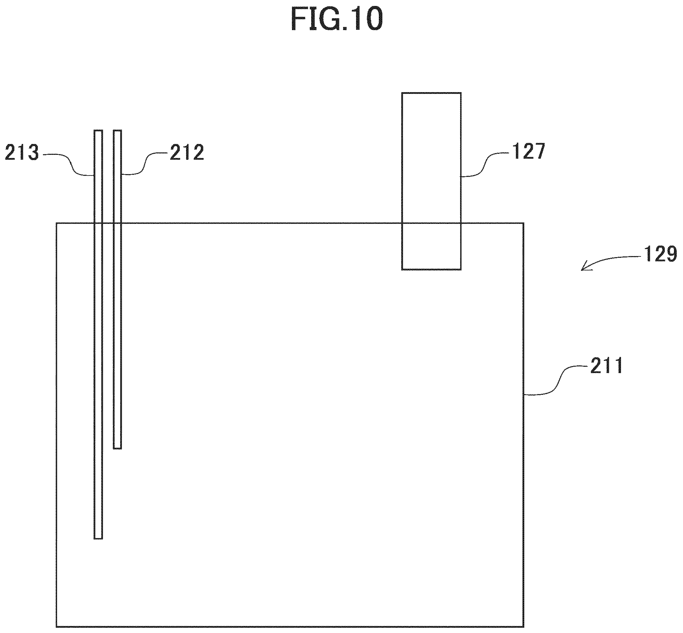

Fig. 10 is a view schematically showing a configuration of the thick waste fluid tank.

The thick waste fluid tank 129 includes a thick waste fluid housing unit 211 that houses the waste fluid discharged from the thick waste fluid outlet port 127 of the automatic analyzer 100, an emergency stop thick waste fluid height sensor 212 that detects height of the waste fluid housed in the thick waste fluid housing unit 211, and an attention attraction thick waste fluid height sensor 213. The emergency stop thick waste fluid height sensor 212 is capable of detecting the liquid level of height serving as a full water position of the thick waste fluid tank 129. It can be seen that the thick waste fluid tank 129 is full when the sensor detects the liquid level. In this case, it is expected that the waste fluid overflows and leaks when the waste fluid is additionally supplied to the thick waste fluid tank 129, and thus the automatic analyzer 100 stops the discharge of the waste fluid. On the other hand, when the emergency stop thick waste fluid height sensor 212 detects the liquid level, it is assumed that a patient sample under measurement cannot be measured completely since the automatic analyzer 100 is emergency stopped, which is basically to be avoided. Therefore, the automatic analyzer 100 includes, in addition to the emergency stop thick waste fluid height sensor 212, the attention attraction thick waste fluid height sensor 213 that detects waste fluid height at a position lower than that of the emergency stop thick waste fluid height sensor 212.

The attention attraction thick waste fluid height sensor 213 is provided for the purpose of attracting attention of an operator and preventing emergency stopping the analyzer. The emergency stop thick waste fluid height sensor 212 and the attention attraction thick waste fluid height sensor 213 are connected to the automatic analyzer 100, and states thereof can be monitored by the monitor unit 134 all the time. The discharge amount of the thick waste fluid is smaller than that of the thin waste fluid. Therefore, the attention attraction thick waste fluid height sensor 213 is provided at a position where the tank is not full even if all dispensed patient samples on the incubator 105 are measured when the new sample acceptation is stopped. The height is at a position higher than that of the attention attraction thin waste fluid height sensor 203 of the thin waste fluid tank 128, and the thick waste fluid tank 129 is less likely to be full at the discharge amount of the thick waste fluid in one day, and thus the operator can sufficiently use the thick waste fluid tank 129 in a configuration using two sensors. Therefore, unlike the thin waste fluid tank 128, the thick waste fluid tank 129 confirms the states of the two sensors to appropriately manage the waste fluid, without using the timer.

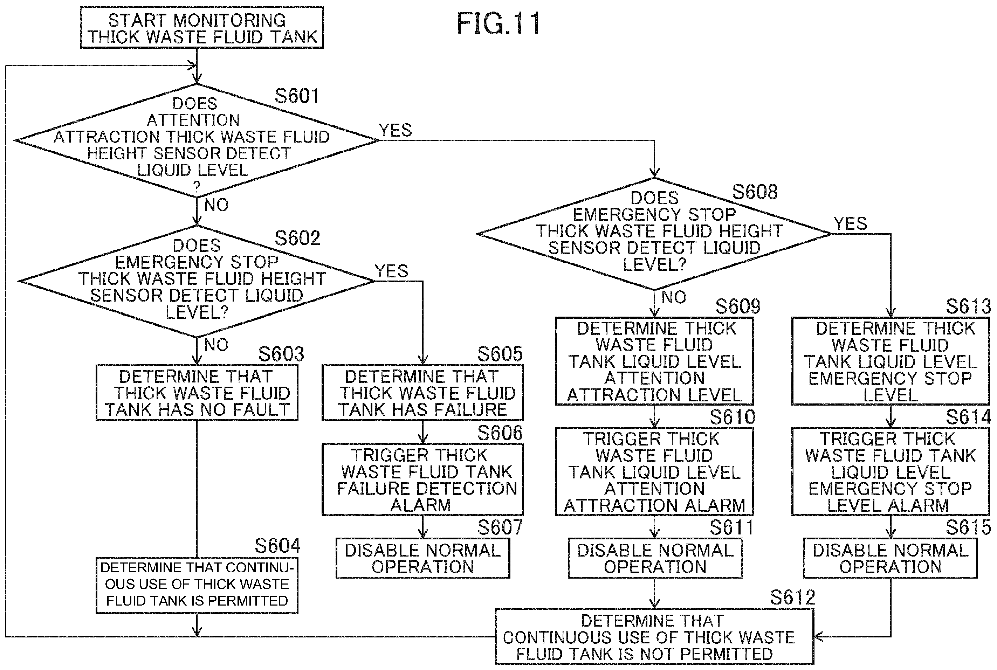

Fig. 11 is a flowchart showing process contents in operation of the thick waste fluid tank at the time of the normal operation.

Here, the normal operation means the measurement standby mode, and the measurement mode, the all-submitted-sample acceptation mode, and the measurement standby mode. During the normal operation, the flowchart shown in Fig. 11 is performed at regular intervals all the time.

In Fig. 11, first, it is determined whether the attention attraction thick waste fluid height sensor 213 detects the liquid level (S601), and in a case where the determination result is NO, it is determined whether the emergency stop thick waste fluid height sensor 212 detects the liquid level (S602). In a case where the determination result in step S602 is NO, it is determined that the thick waste fluid tank has no fault (step S603), it is determined that continuous use of the thick waste fluid tank is permitted (step S604), and the process returns to step S601.

In addition, in a case where the determination result in step S602 is YES, it is determined that the thick waste fluid tank has a failure (step S605), a thick waste fluid tank failure detection alarm is triggered (step S606), and the normal operation is disabled (step S607).

In addition, in a case where the determination result in step S601 is YES, it is determined whether the emergency stop thick waste fluid height sensor 212 detects the liquid level (step S608). In a case where the determination result in step S608 is NO, a thick waste fluid tank liquid level attention attraction level is determined (step S609), a thick waste fluid tank liquid level attention attraction alarm is triggered (step S610), the normal operation is disabled (step S611), it is determined that the continuous use of the thick waste fluid tank is not permitted (step S612), and the process returns to step S601.

In addition, in a case where the determination result in step S608 is YES, a thick waste fluid tank liquid level emergency stop level is determined (step S613), a thick waste fluid tank liquid level emergency stop level alarm is triggered (step S614), the normal operation is disabled (step S615), and the process proceeds to step S612.

In general, in the thick waste fluid tank 129, the waste fluid in the tank is discarded by the operator before the automatic analyzer 100 is activated, and thus the emergency stop thick waste fluid height sensor 212 and the attention attraction thick waste fluid height sensor 213 do not detect the liquid level. Therefore, steps S601 to S604 are repeated continuously until a position of the attention attraction thick waste fluid height sensor 213 is reached during the normal operation. When the cycle is repeated, the automatic analyzer 100 is gradually activated, so that the waste fluid is discharged and the liquid level reaches the position of the attention attraction thick waste fluid height sensor 213. Thus, when the process transitions to step S608 which is a branch of step S601 and the height of the waste fluid is an attention attraction thick waste fluid height sensor 213 level, the control unit 131 determines the thick waste fluid tank liquid level attention attraction level in step S609, and the control unit 131 triggers the thick waste fluid tank liquid level attention attraction alarm in step S610.

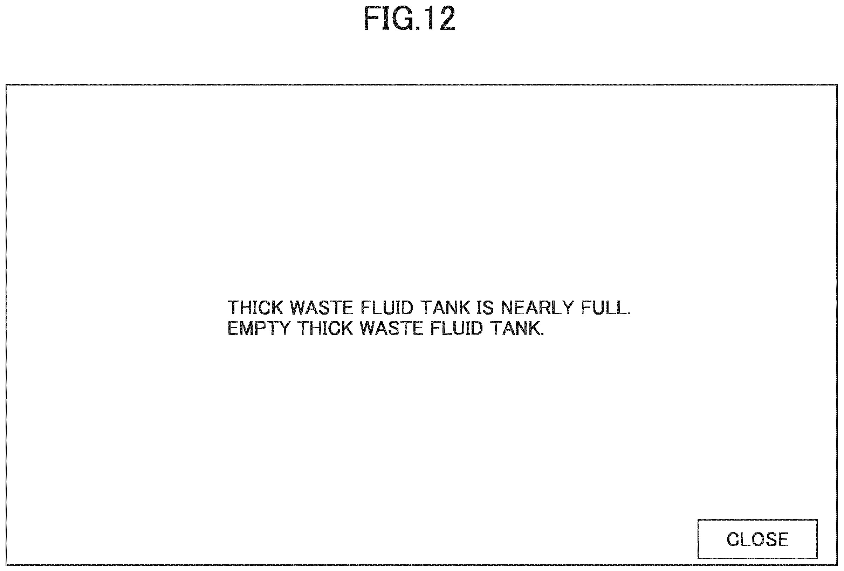

Fig. 12 is a diagram showing a thick waste fluid tank liquid level stop alarm screen.

The control unit 131 causes the display unit 133 to display the screen shown in Fig. 12, and promotes the user to empty the tank. Thereafter, the dispensing acceptation of the new sample is stopped in step S611. In this case, the measurement is continued for the test in which the sample is dispensed into, by the sample dispensing mechanism 106, the reaction containers 114 housed in the incubator 105. In step S612, the control unit 131 determines that the continuous use of the thick waste fluid tank is not permitted, and disables the transition to a mode other than shut down when the automatic analyzer 100 is in the analyzer standby mode. When the automatic analyzer 100 is in the measurement mode, the all-submitted-sample acceptation mode, or the measurement standby mode, the automatic analyzer 100 transitions to the all-submitted-sample acceptation mode in which it is not possible to return to the previous state, causes the measurement to end, and shifts to the analyzer standby mode in which the transition to a mode other than shut down is disabled. Even in the analyzer standby mode in which the transition to a mode other than shut down is disabled, the sensor state is continuously monitored until the two sensors stop detecting the liquid level.

When the thick waste fluid tank 129 is full, the automatic analyzer 100 determines that the liquid level is the emergency stop level, and in step S613, the control unit 131 triggers the thick waste fluid tank liquid level emergency stop level alarm.

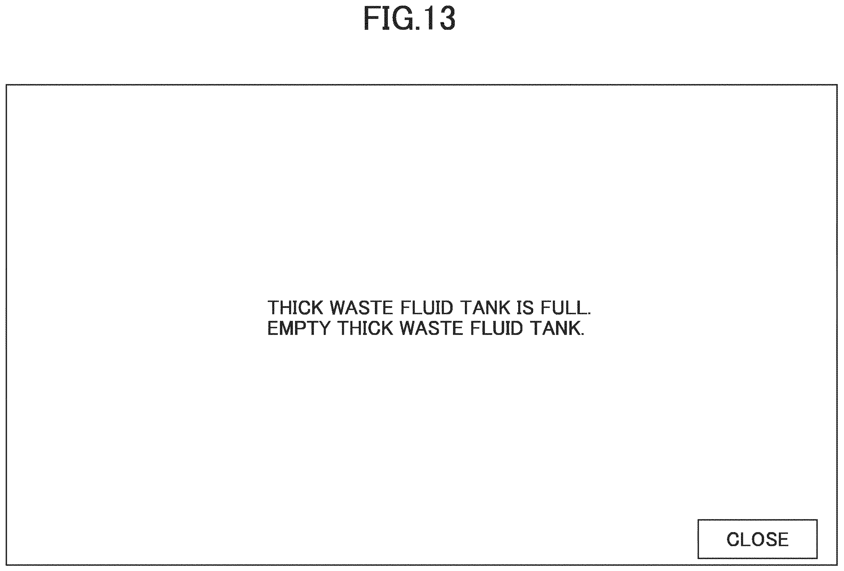

Fig. 13 is a diagram showing a thick waste fluid tank liquid level emergency stop level alarm screen.

The control unit 131 displays the screen shown in Fig. 13 on the display unit 133, and the automatic analyzer 100 is emergency stopped in step S615. In this case, the measurement is also stopped in the test in which the sample is already dispensed by the sample dispensing mechanism 106. In step S612, the control unit 131 determines that the continuous use of the thick waste fluid tank is not permitted, and when the automatic analyzer 100 is in the analyzer standby mode, the transition to a mode other than shut down is disabled. When the automatic analyzer 100 is in the measurement mode, the all-submitted-sample acceptation mode, or the measurement standby mode, the automatic analyzer 100 transitions to the emergency stop mode, forcibly causes the measurement to end, and shifts to the analyzer standby mode in which the transition to a mode other than shut down is disabled. Even in this state, the sensor state is continuously monitored until the two sensors stop detecting the liquid level.

A process when two sensors of the thick waste fluid tank 129 have a failure is as follows. That is, when the emergency stop thick waste fluid height sensor 212 detects the liquid level in step S602, the emergency stop thick waste fluid height sensor 212 at a position higher than that of the attention attraction thick waste fluid height sensor 213 detects the liquid level. In this case, in step S605, the control unit 131 determines that the sensors have a failure. In this case, in step S606, the control unit 131 triggers the thick waste fluid tank failure detection alarm, and displays the thick waste fluid tank failure detection alarm on the display unit 133.

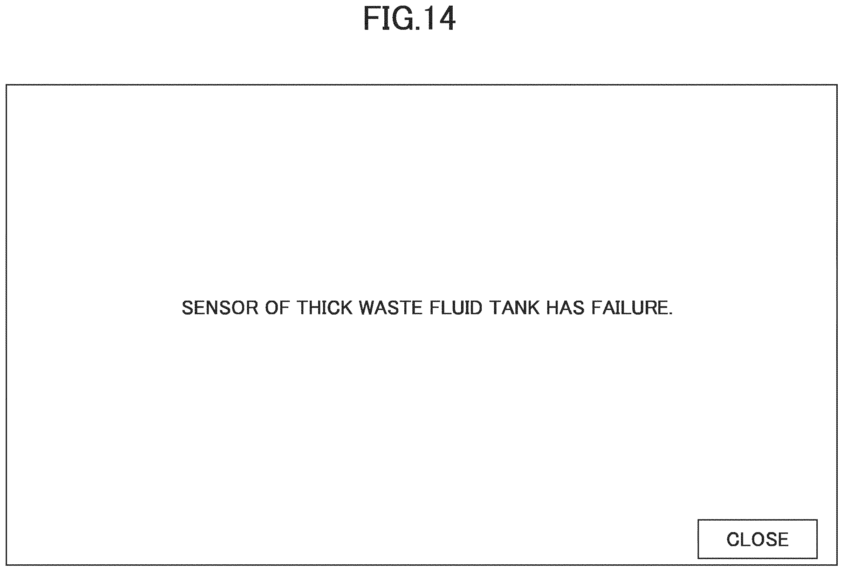

Fig. 14 is a diagram showing a thick waste fluid tank failure alarm screen.

After displaying the screen shown in Fig. 14, the control unit 131 emergency stops the automatic analyzer 100 in step S607. In this case, the measurement is also stopped in the test in which the sample is already dispensed by the sample dispensing mechanism 106. Until the emergency stop thick waste fluid height sensor 212 and the attention attraction thick waste fluid height sensor 213 stop detecting the waste fluid, the automatic analyzer 100 continues stopping the dispensing acceptation of the new sample.

As described above, the present embodiment includes: an analysis unit configured to perform analysis of a sample; a waste fluid housing unit configured to house a waste fluid produced by a process of analyzing the sample; a waste fluid amount detecting unit configured to detect that the waste fluid has reached a predetermined reference amount, the waste fluid being housed in the waste fluid housing unit; a timer unit configured to start counting time when the waste fluid amount detecting unit detects that the waste fluid has reached the reference amount; and a control unit configured to control operation of the analysis unit. The control unit determines, when an operator instructs starting analysis, whether to permit starting analysis by the analysis unit based on whether a count result obtained by the timer unit reaches predetermined reference time. Therefore, it is possible to operate the analyzer while workflows are easily considered and unexpected measurement stops are avoided. That is, by adding a timer function to the configuration using a sensor in the related art, it is possible to flexibly respond to a customer workflow and to enable the prevention of overflow of the waste fluid and preventing loss of the sample.

### <Second Embodiment>

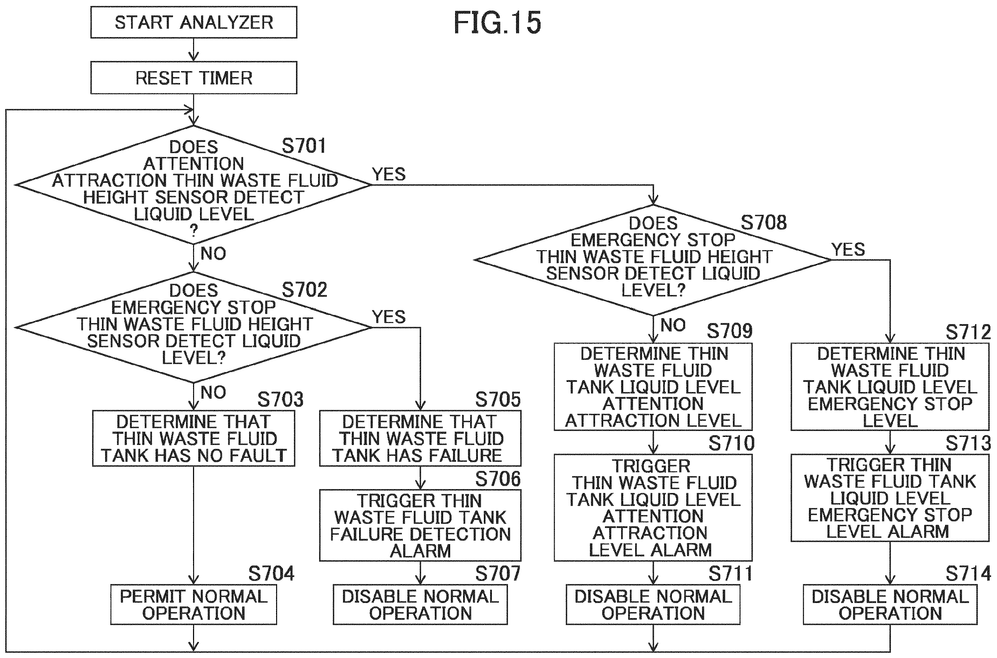

The second embodiment according to the invention will be described with reference to Figs. 15 to 18. In the drawings, the same members as those according to the first embodiment are denoted by the same reference numerals, and descriptions thereof will be omitted.

In the first embodiment, the power is continuously supplied to the automatic analyzer 100, and the monitor unit 134 monitors states of the emergency stop thin waste fluid height sensor 202, the attention attraction thin waste fluid height sensor 203, the emergency stop thick waste fluid height sensor 212, and the attention attraction thick waste fluid height sensor 213 all the time, and reports situation to the control unit 131 according to the state. The present embodiment shows a behavior when the power supplication to the automatic analyzer 100 is stopped in the workflow.

Fig. 15 is a flowchart showing process contents in operation of a thin waste fluid tank at the time of starting the analyzer.

Here, starting the analyzer means that the automatic analyzer 100 is activated from the power off state.

In Fig. 15, first, it is determined whether the attention attraction thin waste fluid height sensor 203 detects a liquid level (S701), and in a case where the determination result is NO, it is determined whether the emergency stop thin waste fluid height sensor 202 detects the liquid level (S702). In a case where the determination result in step S702 is NO, it is determined that the thin waste fluid tank has no fault (step S703), and normal operation is permitted (step S704).

In addition, in a case where the determination result in step S702 is YES, it is determined that the thin waste fluid tank has a failure (step S705), a thin waste fluid tank failure detection alarm is triggered (step S706), and the normal operation is disabled (step S707).

In addition, in a case where the determination result in step S701 is YES, it is determined whether the emergency stop thin waste fluid height sensor 202 detects the liquid level (step S708). In a case where the determination result in step S708 is NO, a thin waste fluid tank liquid level attention attraction level is determined (step S709), a thin waste fluid tank liquid level attention attraction level alarm is triggered (step S710), the normal operation is disabled (step S711), and the process returns to step S701.

In addition, in a case where the determination result in step S708 is YES, a thin waste fluid tank liquid level emergency stop level is determined (step 712), a thin waste fluid tank emergency stop level alarm is triggered (step S713), the normal operation is disabled (step S714), and the process proceeds to step S701.

After starting the analyzer, the control unit 131 resets time of the timer unit 136 and the timer unit 136 is not activated. Thereafter, in step S701, the state of the attention attraction thin waste fluid height sensor 203 is confirmed. Since an operator is required to empty the thin waste fluid tank 128 every day, in general, at the time of starting the analyzer, the thin waste fluid tank 128 is empty and the attention attraction thin waste fluid height sensor 203 and the emergency stop thin waste fluid height sensor 202 do not detect the liquid level. Therefore, only when the two sensors do not detect the liquid level, the control unit 131 determines in step S703 that the thin waste fluid tank has no fault, and the control unit 131 determines in step S704 that operation of the thin waste fluid tank is permitted.

When the attention attraction thin waste fluid height sensor 203 detects the liquid level in step S701, the state of the emergency stop thin waste fluid height sensor 202 is confirmed in step S708. When the emergency stop thin waste fluid height sensor 202 stops detecting the liquid level, the control unit 131 determines in step S709 that the liquid level of the thin waste fluid tank reaches an attention attraction level. Since the thin waste fluid tank 128 is not detected when the operator makes the thin waste fluid tank 128 empty, the control unit 131 triggers a thin waste fluid tank liquid level attention attraction alarm in step S710.

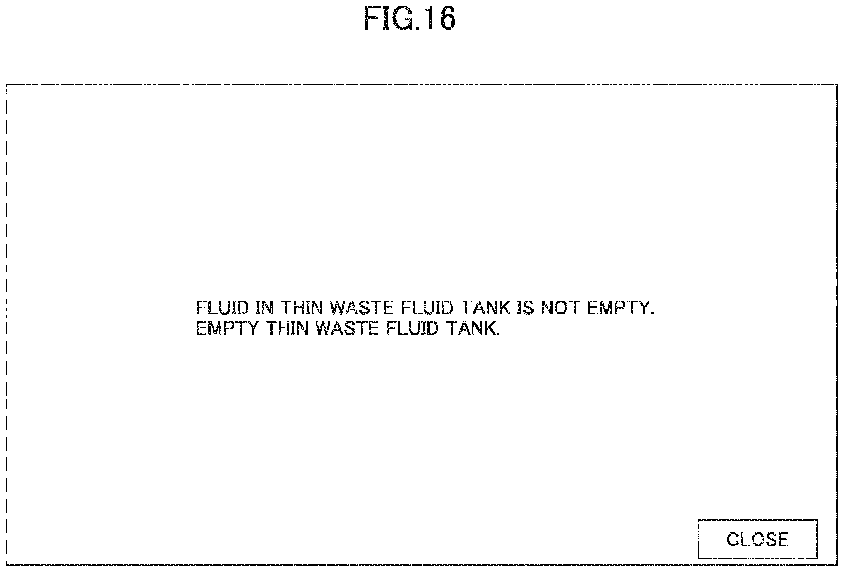

Fig. 16 is a diagram showing a thin waste fluid tank replacement alarm at the time of starting the analyzer.

The control unit 131 causes the display unit 133 to display the screen shown in Fig. 16, and promotes the user to empty the tank. The control unit 131 disables the normal operation in step S711, determines that continuous use of the thin waste fluid tank is not permitted, and continues the flow until the two sensors stop detecting the liquid level.

When the emergency stop thin waste fluid height sensor 202 detects the liquid level in step S708, the control unit 131 determines in step S712 that the liquid level of the thin waste fluid tank 128 is the emergency stop level, and since the thin waste fluid tank 128 is not detected when the operator makes the thin waste fluid tank 128 empty, the control unit 131 triggers a thick waste fluid tank liquid level emergency stop level alarm in step S713. The control unit 131 causes the display unit 133 to display the screen shown in Fig. 16, and promotes the user to empty the tank. The control unit 131 disables the normal operation in step S714, determines that the continuous use of the thick waste fluid tank is not permitted, and continues the flow until the two sensors stop detecting the liquid level.

When the emergency stop thin waste fluid height sensor 202 detects the liquid level in step S702, the emergency stop thin waste fluid height sensor 202 at a position higher than that of the attention attraction thin waste fluid height sensor 203 detects the liquid level. In this case, in step S705, the control unit 131 determines that the sensors have a failure. In this case, in step S706, the control unit 131 triggers the thin waste fluid tank failure detection alarm, and displays the thin waste fluid tank failure detection alarm on the display unit 133. After displaying the screen shown in Fig. 9, the control unit 131 emergency stops the automatic analyzer 100 in step S607. Until the emergency stop thin waste fluid height sensor 202 and the attention attraction thin waste fluid height sensor 203 stop detecting the waste fluid, the normal operation performed by the automatic analyzer 100 continues being stopped.

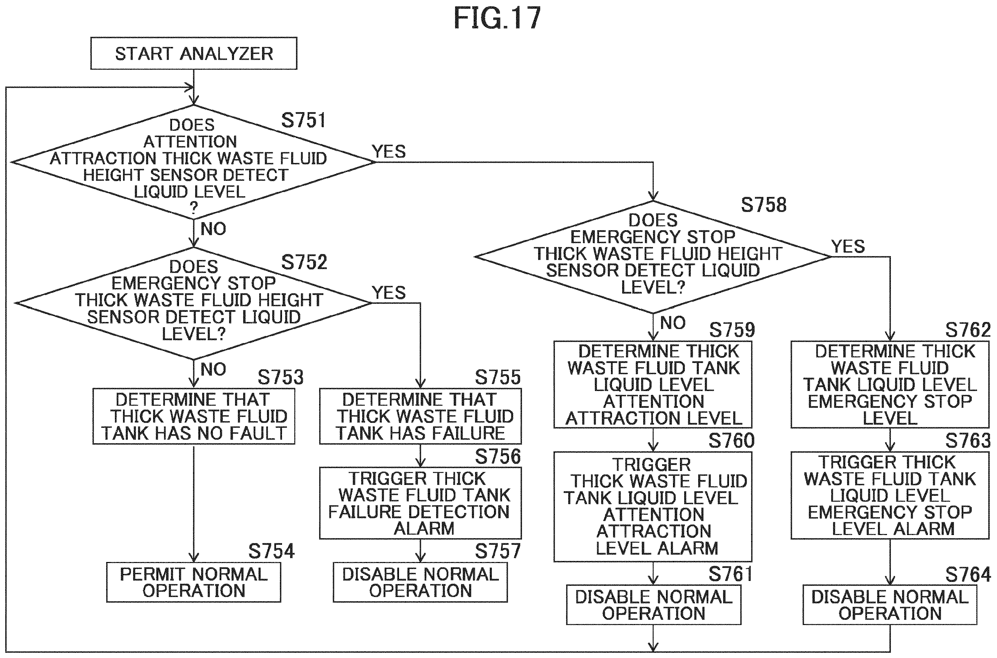

Fig. 17 is a flowchart showing process contents in operation of the thick waste fluid tank at the time of starting the analyzer.

Here, starting the analyzer described below means that the automatic analyzer 100 is activated from the power off state.

In Fig. 17, first, it is determined whether the attention attraction thick waste fluid height sensor 213 detects the liquid level (S751), and in a case where the determination result is NO, it is determined whether the emergency stop thick waste fluid height sensor 212 detects the liquid level (S752). In a case where the determination result in step S602 is NO, it is determined that the thick waste fluid tank has no fault (step S753), and the normal operation is permitted (step S754).

In addition, in a case where the determination result in step S752 is YES, it is determined that the thick waste fluid tank has a failure (step S755), a thick waste fluid tank failure detection alarm is triggered (step S756), and the normal operation is disabled (step S757).

In addition, in a case where the determination result in step S751 is YES, it is determined whether the emergency stop thick waste fluid height sensor 212 detects the liquid level (step S758). In a case where the determination result in step S758 is NO, a thick waste fluid tank liquid level attention attraction level is determined (step S759), a thick waste fluid tank liquid level attention attraction alarm is triggered (step S760), the normal operation is disabled (step S761), and the process returns to step S751.

In addition, in a case where the determination result in step S758 is YES, a thick waste fluid tank liquid level emergency stop level is determined (step S762), the thick waste fluid tank liquid level emergency stop level alarm is triggered (step S763), the normal operation is disabled (step S764), and the process proceeds to step S751.

When the analyzer is started, the state of the attention attraction thick waste fluid height sensor 213 is confirmed in step S751. Since the operator is required to empty the thick waste fluid tank 129 every day, in general, at the time of starting the analyzer, the thick waste fluid tank 129 is empty and the attention attraction thick waste fluid height sensor 213 and the emergency stop thick waste fluid height sensor 212 stop detecting the liquid level. Therefore, only when the two sensors stop detecting the liquid level, the control unit 131 determines in step S753 that the thick waste fluid tank has no fault, and the control unit 131 determines in step S754 that operation of the thick waste fluid tank is permitted.

When the attention attraction thick waste fluid height sensor 213 detects the liquid level in step S751, the state of the emergency stop thick waste fluid height sensor 212 is confirmed in step S758. When the emergency stop thick waste fluid height sensor 212 stops detecting the liquid level, the control unit 131 determines in step S759 that the liquid level of the thick waste fluid tank reaches an attention attraction level. Since the thick waste fluid tank 129 is not detected when the operator makes the thick waste fluid tank 129 empty, the control unit 131 triggers a thick waste fluid tank liquid level attention attraction alarm in step S760.

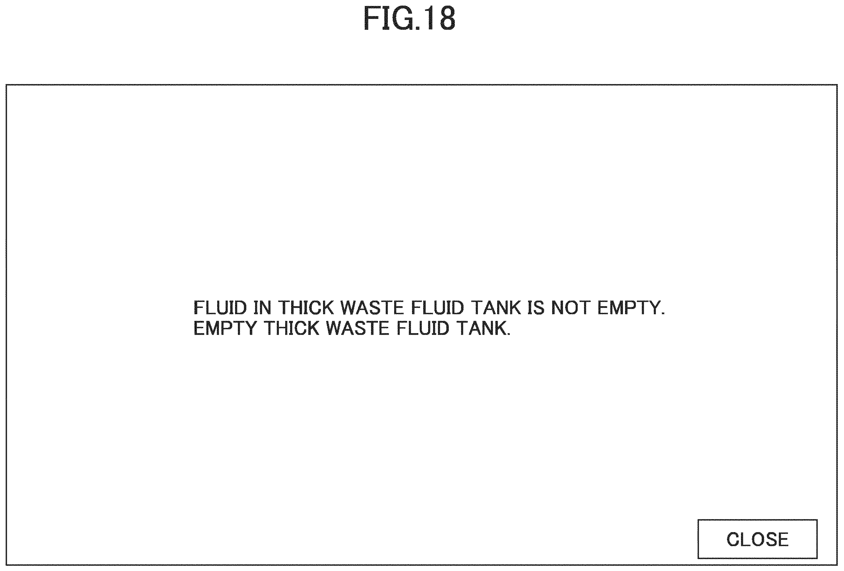

Fig. 18 is a diagram showing a thick waste fluid tank replacement alarm at the time of starting the analyzer.

The control unit 131 causes the display unit 133 to display the screen shown in Fig. 18, and promotes the user to empty the tank. The control unit 131 disables the normal operation in step S761, determines that the continuous use of the thick waste fluid tank is not permitted, and continues the flow until the two sensors stop detecting the liquid level.

When the emergency stop thick waste fluid height sensor 212 detects the liquid level in step S758, the control unit 131 determines in step S762 that the liquid level of the thick waste fluid tank 129 is the emergency stop level. Since the thick waste fluid tank 129 is not detected when the operator makes the thick waste fluid tank 129 empty, the control unit 131 triggers the thick waste fluid tank liquid level emergency stop level alarm in step S763. The control unit 131 causes the display unit 133 to display the screen shown in Fig. 18, and promotes the user to empty the tank. The control unit 131 disables the normal operation in step S764, determines that the continuous use of the thick waste fluid tank is not permitted, and continues the flow until the two sensors stop detecting the liquid level.

When the emergency stop thick waste fluid height sensor 212 detects the liquid level in step S752, the emergency stop thick waste fluid height sensor 212 at a position higher than that of the attention attraction thick waste fluid height sensor 213 detects the liquid level. In this case, in step S755, the control unit 131 determines that the sensors have a failure. In this case, in step S756, the control unit 131 triggers the thick waste fluid tank failure detection alarm, and displays the thick waste fluid tank failure detection alarm on the display unit 133. After displaying the screen shown in Fig. 14, the control unit 131 emergency stops the automatic analyzer 100 in step S657. Until the emergency stop thick waste fluid height sensor 212 and the attention attraction thick waste fluid height sensor 213 stop detecting the waste fluid, the normal operation performed by the automatic analyzer 100 continues being stopped.

Other configurations are the same as those according to the first embodiment.

The present embodiment configured as described above can achieve the same effects as those of the first embodiment.

In addition, even after the power supplication stop state in which the timer unit 136 is stopped, a customer can perform an appropriate operation along a customer workflow.

### <Third Embodiment>

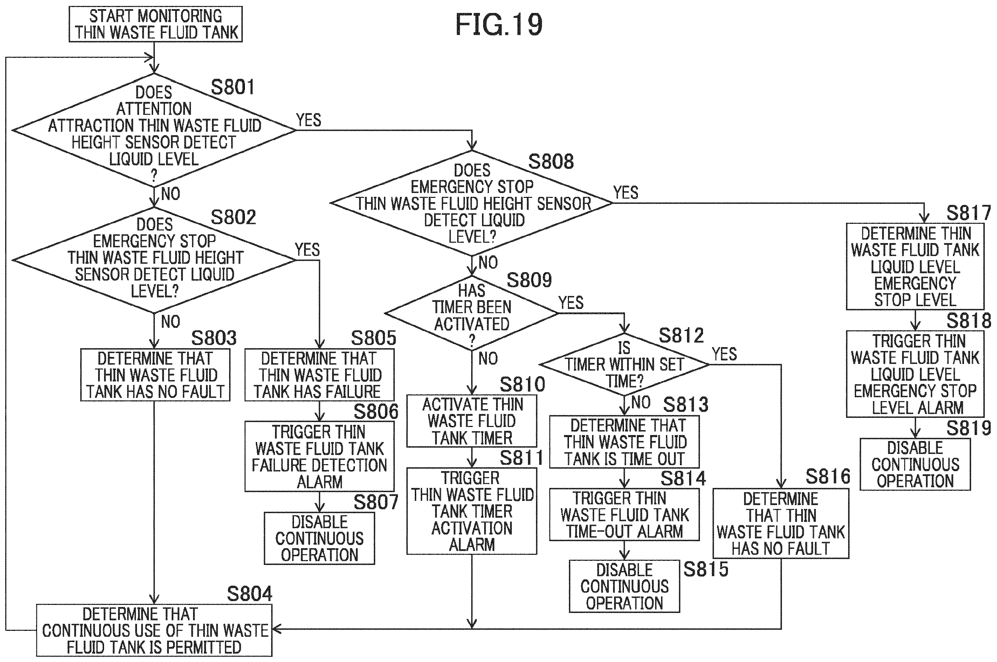

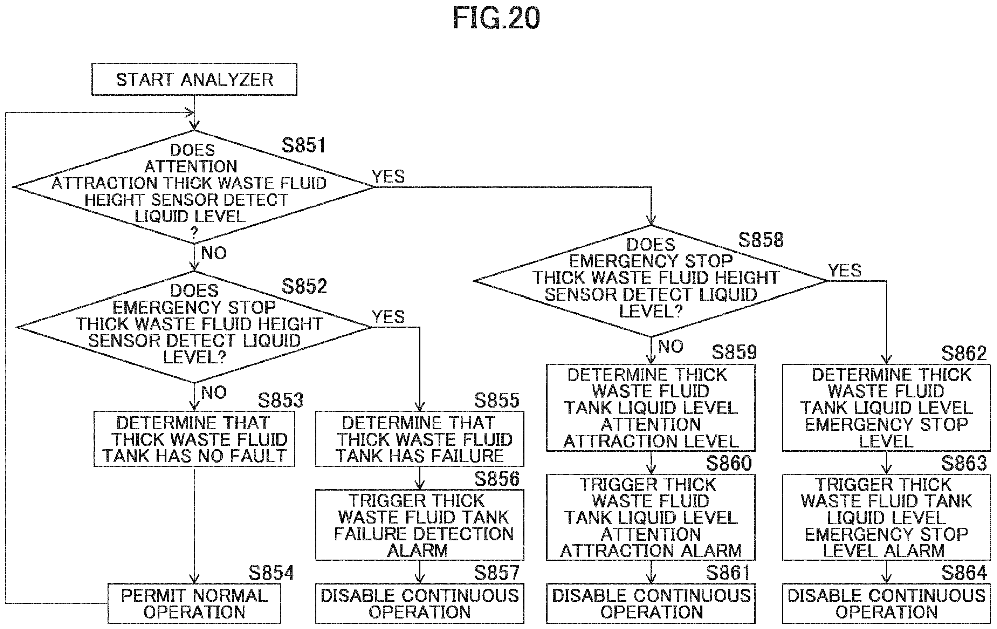

The third embodiment according to the invention will be described with reference to Figs. 19 and 20. In the drawings, the same members as those according to the first embodiment are denoted by the same reference numerals, and descriptions thereof will be omitted.

The present embodiment shows a waste fluid monitoring function in states (a maintenance mode, a reagent registration mode, a measurement commencement mode, a measurement end mode) other than a normal state in which acceptation of a new sample is permitted all the time, in a workflow.

Fig. 19 is a flowchart showing process contents in operation of a thin waste fluid tank in the states other than the normal state in which the acceptation of the new sample is permitted all the time.

In the states other than the normal state in which the acceptation of the new sample is permitted, the flow shown in Fig. 19 is performed at regular intervals all the time.

In Fig. 19, first, it is determined whether the attention attraction thin waste fluid height sensor 203 detects a liquid level (S801), and in a case where the determination result is NO, it is determined whether the emergency stop thin waste fluid height sensor 202 detects the liquid level (S802). In a case where the determination result in step S802 is NO, it is determined that the thin waste fluid tank has no fault (step S803), it is determined that the continuous use of the waste fluid tank is permitted (step S804), and the process returns to step S801.

In addition, in a case where the determination result in step S802 is YES, it is determined that the thin waste fluid tank has a failure (step S805), a thin waste fluid tank failure detection alarm is triggered (step S806), and continuous operation is disabled (step S807).

In addition, in a case where the determination result in step S801 is YES, it is determined whether the emergency stop thin waste fluid height sensor 202 detects the liquid level (step S808). In a case where the determination result in step S808 is NO, it is determined whether a timer unit is activated and starts counting (step S809). In a case where the determination result in step S809 is NO, the timer unit 136 related to the thin waste fluid tank 128 starts counting (step S810), a thin waste fluid tank timer activation alarm is triggered (step S811), and the process proceeds to step S804.

In addition, in a case where the determination result in step S809 is YES, it is determined whether counting performed by the timer unit 136 is performed within predetermined set time (step S812). In a case where the determination result in step S812 is NO, it is determined that the thin waste fluid tank is time out (step S813), a thin waste fluid tank time-out alarm is triggered (step S814), and the continuous operation is disabled (step S815). In addition, in a case where the determination result in step S812 is YES, it is determined that the thin waste fluid tank has no fault (step S816), and the process proceeds to step S804.

In addition, in a case where the determination result in step S808 is YES, a thin waste fluid tank liquid level emergency stop level is determined (step 817), a thin waste fluid tank emergency stop level alarm is triggered (step S818), and the continuous operation is disabled (step S819).

In the states other than the normal state in which the acceptation of the new sample is permitted, steps S801 to S804 are repeated continuously until a position of the attention attraction thin waste fluid height sensor 203 is reached in the same manner as in the normal operation. When the cycle is repeated, the automatic analyzer 100 is gradually activated, so that waste fluid is discharged and the liquid level reaches the position of the attention attraction thin waste fluid height sensor 203. Thus, the process proceeds to step S808 which is a branch of step S801, and the timer unit 136 described above is activated. In order to attract attention of an operator when the timer unit 136 is activated, the control unit 131 triggers the thin waste fluid tank timer activation alarm shown in Fig. 6. When height of the waste fluid is at a level of the attention attraction thin waste fluid height sensor 203, the operation can be sufficiently and continually performed, and thus the automatic analyzer 100 is not stopped. When the normal operation is continued without discarding the waste fluid in the thin waste fluid tank 128 even after the thin waste fluid tank timer activation alarm is confirmed, the timer unit 136 continues counting to proceed the timer. In step S812, the control unit 131 compares time of the timer unit 136 with time in the preset timer time setting 207, and can continue the operation if the time of the timer unit 136 is within the time in the timer time setting 207. However, when time in the timer time setting 207 is passed, the control unit 131 determines in step S813 that the thin waste fluid tank is time out, and the control unit 131 triggers the thin waste fluid tank time-out alarm in step S814. The control unit 131 causes the display unit 133 to display the screen shown in Fig. 7, and promotes a user to empty the tank. Thereafter, in any one of the maintenance mode, the reagent registration mode, the measurement commencement mode, and the measurement end mode, the automatic analyzer 100 is emergency stopped and transitions to an analyzer standby mode.

Even within the time in the timer time setting 207, when the emergency stop thin waste fluid height sensor 202 indicating that a discharge amount of the waste fluid is large and the tank is full detects the liquid level, the control unit 131 determines in step S817 that the liquid level of the thin waste fluid tank 128 is an emergency stop level, and the control unit 131 triggers a thin waste fluid tank liquid level emergency stop level alarm in step S818. The control unit 131 displays the screen shown in Fig. 8 on the display unit 133, and the automatic analyzer 100 is emergency stopped in step S819. Even in any one of the maintenance mode, the reagent registration mode, the measurement commencement mode, and the measurement end mode, the automatic analyzer 100 is emergency stopped and transitions to the analyzer standby mode.

A process when two sensors of the thin waste fluid tank 128 have a failure is as follows. That is, when the emergency stop thin waste fluid height sensor 202 detects the liquid level in step S802, the emergency stop thin waste fluid height sensor 202 at a position higher than that of the attention attraction thin waste fluid height sensor 203 detects the liquid level. In this case, in step S805, the control unit 131 determines that the sensors have a failure. In this case, in step S806, the control unit 131 triggers the thin waste fluid tank failure detection alarm, and displays the thin waste fluid tank failure detection alarm on the display unit 133. After displaying the screen shown in Fig. **9****,** the control unit 131 emergency stops the automatic analyzer 100 in step S807. In this case, the measurement is also stopped in the test in which the sample is already dispensed by the sample dispensing mechanism 106. Until the emergency stop thin waste fluid height sensor 202 and the attention attraction thin waste fluid height sensor 203 stop detecting the waste fluid, the automatic analyzer 100 continues stopping the dispensing acceptation of the new sample.

Fig. 20 is a flowchart showing process contents in operation of a thick waste fluid tank in the states other than the normal state in which the acceptation of the new sample is permitted all the time.

In the states other than the normal state in which the acceptation of a new sample is permitted, the flow shown in Fig. 20 is performed at regular intervals all the time.

In Fig. 20, first, it is determined whether the attention attraction thick waste fluid height sensor 213 detects the liquid level (S851), and in a case where the determination result is NO, it is determined whether the emergency stop thick waste fluid height sensor 212 detects the liquid level (S852). In a case where the determination result in step S602 is NO, it is determined that the thick waste fluid tank has no fault (step S853), the normal operation is permitted (step S854), and the process returns to step S851.

In addition, in a case where the determination result in step S852 is YES, it is determined that the thick waste fluid tank has a failure (step S855), a thick waste fluid tank failure detection alarm is triggered (step S856), and the continuous operation is disabled (step S857).

In addition, in a case where the determination result in step S851 is YES, it is determined whether the emergency stop thick waste fluid height sensor 212 detects the liquid level (step S858). In a case where the determination result in step S858 is NO, a thick waste fluid tank liquid level attention attraction level is determined (step S859), a thick waste fluid tank liquid level attention attraction alarm is triggered (step S860), and the normal operation is disabled (step S861).

In addition, in a case where the determination result in step S858 is YES, a thick waste fluid tank liquid level emergency stop level is determined (step S862), a thick waste fluid tank liquid level emergency stop level alarm is triggered (step S863), and the continuous operation is disabled (step S864).

In the states other than the normal state in which the acceptation of the new sample is permitted all the time, steps S851 to S854 are repeated continuously until a position of the attention attraction thick waste fluid height sensor 213 is reached in the same manner as in the normal operation. When the cycle is repeated, the automatic analyzer 100 is gradually activated, so that the waste fluid is discharged and the liquid level reaches the position of the attention attraction thick waste fluid height sensor 213.

When the attention attraction thick waste fluid height sensor 213 detects the liquid level in step S851, a state of the emergency stop thick waste fluid height sensor 212 is confirmed in step S858. When the emergency stop thick waste fluid height sensor 212 stops detecting the liquid level, the control unit 131 determines in step S859 that the liquid level of the thick waste fluid tank reaches an attention attraction level. The control unit 131 causes the display unit 133 to display the screen shown in Fig. 12, and promotes the user to empty the tank. Thereafter, in any one of the maintenance mode, the reagent registration mode, the measurement commencement mode, and the measurement end mode, the automatic analyzer 100 is emergency stopped and transitions to the analyzer standby mode.

When the emergency stop thick waste fluid height sensor 212 detects the liquid level in step S858, the control unit 131 determines in step S862 that the liquid level of the thick waste fluid tank 129 is the emergency stop level. The control unit 131 causes the display unit 133 to display the screen shown in Fig. 13, and promotes the user to empty the tank. Thereafter, in any one of the maintenance mode, the reagent registration mode, the measurement commencement mode, and the measurement end mode, the automatic analyzer 100 is emergency stopped and transitions to the analyzer standby mode.

When the emergency stop thick waste fluid height sensor 212 detects the liquid level in step S852, the emergency stop thick waste fluid height sensor 212 at a position higher than that of the attention attraction thick waste fluid height sensor 213 detects the liquid level. In this case, in step S855, the control unit 131 determines that the sensors have a failure. In this case, in step S856, the control unit 131 triggers the thick waste fluid tank failure detection alarm, and displays the thick waste fluid tank failure detection alarm on the display unit 133. After displaying the screen shown in Fig. 14, the control unit 131 emergency stops the automatic analyzer 100 in step S857. Until the emergency stop thick waste fluid height sensor 212 and the attention attraction thick waste fluid height sensor 213 stop detecting the waste fluid, the normal operation performed by the automatic analyzer 100 continues being stopped.

Other configurations are the same as those according to the first embodiment.

The present embodiment configured as described above can achieve the same effects as those of the first embodiment.

In addition, in states other than the normal state in which the acceptation of the new sample is permitted all the time, which is different from the normal operation, the customer can also perform an appropriate operation along the customer workflow.

### <Appendix>

Each of the configurations, functions, and the like as described above may be implemented by designing a part or all of the configurations, functions, and the like in, for example, an integrated circuit. In addition, each of the above-mentioned configurations, functions, and the like may be implemented by software through means of a processor interpreting and executing a program for implementing respective functions.

### References Sign List

- 100:: automatic analyzer
- 101:: analysis unit
- 102:: rack
- 103:: rack transport line
- 104:: reagent low temperature insulation unit
- 105:: incubator (reaction disk)
- 106:: sample dispensing mechanism (specimen dispensing mechanism)
- 107:: reagent dispensing mechanism
- 108:: reagent stirring mechanism
- 109:: consumable item transport mechanism
- 110:: B/F separation unit
- 111:: detecting unit
- 112:: reagent container
- 113:: reagent disk cover
- 114:: reaction container
- 115:: reaction container placement part
- 116:: dispensing tip
- 117:: reaction container dispensing tip housing container
- 118:: dispensing tip installation position
- 119:: stirring mechanism
- 120:: separation part
- 121:: B/F separation probe
- 122:: B/F separation probe cleaning unit
- 123:: B/F separating stirring unit
- 124:: transport unit
- 125:: reaction solution aspiration nozzle
- 126:: thin waste fluid outlet port
- 127:: thick waste fluid outlet port
- 128:: thin waste fluid tank
- 129:: thick waste fluid tank
- 130:: controller
- 131:: control unit
- 132:: input unit
- 133:: display unit
- 134:: monitor unit
- 135:: storage unit
- 136:: timer unit
- 201:: thin waste fluid housing unit
- 202:: emergency stop thin waste fluid height sensor
- 203:: attention attraction thin waste fluid height sensor
- 204:: setting screen
- 205:: thick waste fluid setting
- 206:: thin waste fluid setting
- 207:: timer time setting
- 208:: save button
- 211:: thick waste fluid housing unit
- 212:: emergency stop thick waste fluid height sensor
- 213:: attention attraction thin waste fluid height sensor

## Claims

1. An automatic analyzer (100) comprising:
an analysis unit (101) configured to perform analysis of a sample;
a waste fluid housing unit (201) configured to house a waste fluid produced by a process of analyzing the sample;
a first waste fluid amount detecting unit (203) configured to detect that the waste fluid has reached a predetermined first reference amount, the waste fluid being housed in the waste fluid housing unit (201);
a timer unit (136) configured to start counting time when the first waste fluid amount detecting unit (203) detects that the waste fluid has reached the first reference amount; and
a control unit (131) configured to control operation of the analysis unit (101),
wherein the control unit (131) is configured to determine, when an operator instructs starting analysis, whether to permit starting analysis by the analysis unit (101) based on whether a count result obtained by the timer unit (136) reaches a predetermined reference time,
**characterized by** a second waste fluid amount detecting unit (202) configured to detect that the waste fluid housed in the waste fluid housing unit (201) has reached a predetermined second reference amount as a value larger than the first reference amount, wherein
when the waste fluid housed in the waste fluid housing unit (201) has reached the predetermined second reference amount, the control unit (131) is configured to trigger an alarm notifying the operator that the waste fluid has reached the second reference amount.

2. The automatic analyzer (100) according to claim 1, wherein
when the operator instructs starting analysis, the control unit (131) is configured to permit starting analysis by the analysis unit (101) when the count result obtained by the timer unit (136) is less than the reference time; and
when the count result is the reference time or longer, the control unit (131) is configured not to start analysis by the analysis unit (101).

3. The automatic analyzer (100) according to claim 1, wherein the reference time is editable by the operator.

4. The automatic analyzer (100) according to claim 1, wherein when the waste fluid housed in the waste fluid housing unit (201) having reached the first reference amount is not detected and the waste fluid having reached the predetermined second reference amount is detected, the control unit (131) is configured to trigger an alarm notifying the operator that the first waste fluid amount detecting unit (203) has a failure.

5. The automatic analyzer (100) according to claim 1, wherein in starting the automatic analyzer (100), when a waste fluid housed in the waste fluid housing unit (201) having reached the first reference amount is detected, the control unit (131) is configured to trigger an alarm promoting the operator to discard a waste fluid in the waste fluid housing unit (201).

6. The automatic analyzer (100) according to claim 1, wherein after the first waste fluid amount detecting unit (203) detects that the waste fluid has reached the first reference amount and counting time is started and when the first waste fluid amount detecting unit (203) stops detecting that the waste fluid has reached the first reference amount, the control unit (131) is configured to reset the counting time of the timer unit (136).

## Patentansprüche

1. Automatischer Analysator (100), umfassend:
eine Analyseeinheit (101), die dazu konfiguriert ist, eine Analyse einer Probe durchzuführen;
eine Abfallflüssigkeits-Aufnahmeeinheit (201), die dazu konfiguriert ist, eine Abfallflüssigkeit aufzunehmen, die durch einen Prozess des Analysierens der Probe erzeugt wird;
eine erste Abfallflüssigkeitsmengen-Erfassungseinheit (203), die dazu konfiguriert ist, zu erfassen, dass die Abfallflüssigkeit eine vorbestimmte erste Referenzmenge erreicht hat, wobei die Abfallflüssigkeit in der Abfallflüssigkeits-Aufnahmeeinheit (201) aufgenommen ist;
eine Zeitgebereinheit (136), die dazu konfiguriert ist, das Zählen von Zeit zu starten, wenn die erste Abfallflüssigkeitsmengen-Erfassungseinheit (203) erfasst, dass die Abfallflüssigkeit die erste Referenzmenge erreicht hat; und
eine Steuereinheit (131), die dazu konfiguriert ist, den Betrieb der Analyseeinheit (101) zu steuern,
wobei die Steuereinheit (131) dazu konfiguriert ist, zu bestimmen, wenn ein Bediener das Starten einer Analyse anweist, ob das Starten der Analyse durch die Analyseeinheit (101) zu erlauben ist, basierend darauf, ob ein von der Zeitgebereinheit (136) erhaltenes Zählergebnis eine vorbestimmte Referenzzeit erreicht,
**gekennzeichnet durch** eine zweite Abfallflüssigkeitsmengen-Erfassungseinheit (202), die dazu konfiguriert ist, zu erfassen, dass die in der Abfallflüssigkeits-Aufnahmeeinheit (201) aufgenommene Abfallflüssigkeit eine vorbestimmte zweite Referenzmenge als einen Wert größer als die erste Referenzmenge erreicht hat, wobei
wenn die in der Abfallflüssigkeits-Aufnahmeeinheit (201) aufgenommene Abfallflüssigkeit die vorbestimmte zweite Referenzmenge erreicht hat, die Steuereinheit (131) dazu konfiguriert ist, einen Alarm auszulösen, der den Bediener benachrichtigt, dass die Abfallflüssigkeit die zweite Referenzmenge erreicht hat.

2. Automatischer Analysator (100) nach Anspruch 1, wobei
wenn der Bediener das Starten einer Analyse anweist, die Steuereinheit (131) dazu konfiguriert ist, das Starten der Analyse durch die Analyseeinheit (101) zu erlauben, wenn das von der Zeitgebereinheit (136) erhaltene Zählergebnis geringer als die Referenzzeit ist; und
wenn das Zählergebnis die Referenzzeit oder länger ist, die Steuereinheit (131) dazu konfiguriert ist, die Analyse durch die Analyseeinheit (101) nicht zu starten.

3. Automatischer Analysator (100) nach Anspruch 1, wobei die Referenzzeit durch den Bediener editierbar ist.

4. Automatischer Analysator (100) nach Anspruch 1, wobei, wenn die in der Abfallflüssigkeits-Aufnahmeeinheit (201) aufgenommene Abfallflüssigkeit, die die erste Referenzmenge erreicht hat, nicht erfasst wird und die Abfallflüssigkeit, die die vorbestimmte zweite Referenzmenge erreicht hat, erfasst wird, die Steuereinheit (131) dazu konfiguriert ist, einen Alarm auszulösen, der den Bediener benachrichtigt, dass die erste Abfallflüssigkeitsmengen-Erfassungseinheit (203) eine Störung aufweist.

5. Automatischer Analysator (100) nach Anspruch 1, wobei beim Starten des automatischen Analysators (100), wenn eine in der Abfallflüssigkeits-Aufnahmeeinheit (201) aufgenommene Abfallflüssigkeit, die die erste Referenzmenge erreicht hat, erfasst wird, die Steuereinheit (131) dazu konfiguriert ist, einen Alarm auszulösen, der den Bediener auffordert, eine Abfallflüssigkeit in der Abfallflüssigkeits-Aufnahmeeinheit (201) zu entsorgen.

6. Automatischer Analysator (100) nach Anspruch 1, wobei, nachdem die erste Abfallflüssigkeitsmengen-Erfassungseinheit (203) erfasst, dass die Abfallflüssigkeit die erste Referenzmenge erreicht hat und das Zählen der Zeit gestartet wurde und wenn die erste Abfallflüssigkeitsmengen-Erfassungseinheit (203) aufhört zu erfassen, dass die Abfallflüssigkeit die erste Referenzmenge erreicht hat, die Steuereinheit (131) dazu konfiguriert ist, die Zählzeit der Zeitgebereinheit (136) zurückzusetzen.

## Revendications

1. Analyseur automatique (100) comprenant :
une unité (101) d'analyse configurée pour exécuter une analyse d'un échantillon ;
une unité (201) de réception de fluide usé configurée pour recevoir un fluide usé produit par un processus d'analyse de l'échantillon ;
une première unité (203) de détection de quantité de fluide usé configurée pour détecter que le fluide usé a atteint une première quantité de référence prédéterminée, le fluide usé étant reçu dans l'unité (201) de réception de fluide usé ;
une unité (136) de temporisateur configurée pour démarrer un temps de décompte lorsque la première unité (203) de détection de quantité de fluide usé détecte que le fluide usé a atteint la première quantité de référence ; et
une unité (131) de commande configurée pour commander le fonctionnement de l'unité (101) d'analyse,
dans lequel l'unité (131) de commande est configurée pour déterminer, lorsqu'un opérateur ordonne un démarrage d'analyse, s'il convient d'autoriser le démarrage d'analyse par l'unité (101) d'analyse sur la base qu'un résultat de décompte obtenu par l'unité (136) de temporisateur a atteint ou non un temps de référence prédéterminé,
**caractérisé par** une deuxième unité (202) de détection de quantité de fluide usé configurée pour détecter que le fluide usé reçu dans l'unité (201) de réception de fluide usé a atteint une deuxième quantité de référence prédéterminée comme une valeur plus grande que la première quantité de référence, dans lequel
lorsque le fluide usé reçu dans l'unité (201) de réception de fluide usé a atteint la deuxième quantité de référence prédéterminée, l'unité (131) de commande est configurée pour déclencher une alarme notifiant l'opérateur que le fluide usé a atteint la deuxième quantité de référence.

2. Analyseur automatique (100) selon la revendication 1, dans lequel
lorsque l'opérateur ordonne un démarrage d'analyse, l'unité (131) de commande est configurée pour autoriser le démarrage d'analyse par l'unité (101) d'analyse lorsque le résultat de décompte obtenu par l'unité (136) de temporisateur est inférieur au temps de référence ; et
lorsque le résultat de décompte est le temps de référence ou plus long, l'unité (131) de commande est configurée pour ne pas démarrer l'analyse par l'unité (101) d'analyse.

3. Analyseur automatique (100) selon la revendication 1, dans lequel le temps de référence est éditable par l'opérateur.

4. Analyseur automatique (100) selon la revendication 1, dans lequel, lorsque le fluide usé reçu dans l'unité (201) de réception de fluide usé ayant atteint la première quantité de référence n'est pas détecté et que le fluide usé ayant atteint la deuxième quantité de référence prédéterminée est détecté, l'unité (131) de commande est configurée pour déclencher une alarme notifiant l'opérateur que la première unité (203) de détection de quantité de fluide usé a un dysfonctionnement.

5. Analyseur automatique (100) selon la revendication 1, dans lequel, au démarrage de l'analyseur automatique, lorsqu'un fluide usé reçu dans l'unité (201) de réception de fluide usé ayant atteint la première quantité de référence est détecté, l'unité (131) de commande est configurée pour déclencher une alarme invitant l'opérateur à rejeter un fluide usé dans l'unité (201) de réception de fluide usé.

6. Analyseur automatique (100) selon la revendication 1, dans lequel, après que la première unité (203) de détection de quantité de fluide usé a détecté que le fluide usé a atteint la première quantité de référence et que le temps de décompte est démarré et lorsque la première unité (203) de détection de quantité de fluide usé arrête de détecter que le fluide usé a atteint la première quantité de référence, l'unité (131) de commande est configurée pour réinitialiser le temps de décompte de l'unité (136) de temporisateur.
